# EUROPÄISCHE PATENTSCHRIFT

(11) **EP 0 583 447 B1**
(45) Veröffentlichungstag und Bekanntmachung des Hinweises auf die Patenterteilung: **25.08.1999**
(21) Anmeldenummer: 93903785.9
(22) Anmeldetag: 06.03.1993
(51) Int. Cl.: A23L 1/16, B65B 35/50, B65B 35/44

(54) **VERFAHREN UND VORRICHTUNG ZUR HERSTELLUNG VON LANGEN TEIGFORMATEN**
PROCESS AND DEVICE FOR PRODUCING LONG STRIPS OF DOUGH
PROCEDE ET DISPOSITIF DE FABRICATION DE LONGS RUBANS DE PATE

(30) Priorität: 07.03.1992 CH 71892; 01.04.1992 WO PCT/CH92/00060
(43) Veröffentlichungstag der Anmeldung: 23.02.1994
(73) Patentinhaber: BÜHLER AG, 9240 Uzwil (CH)
(72) Erfinder: EGGER, Friedrich, CH-9244 Niederuzwil (CH); SEILER, Werner, CH-9523 Züberwangen (CH); RESCH, Heinz, CH-9230 Flawil (CH)
(86) Internationale Anmeldenummer: CH9300057
(87) Internationale Veröffentlichungsnummer: WO9317583

(56) Entgegenhaltungen:
- EP-A- 0 253 307
- WO-A-86/03654
- WO-A-92/17074
- CH-A- 317 991
- FR-A- 437 357
- US-A- 3 512 336
- US-A- 4 769 975

## Beschreibung

Die Erfindung betrifft ein Verfahren und eine Vorrichtung zur Herstellung von langen Teigformaten, z.B. von Lasagne, wobei die Teigformate über eine Teigformeinrichtung in parallelen Bahnen hergestellt, getrocknet und in verfestigter Form in die Verpackungslänge geschnitten und für die Verpackung bereitgestellt werden.

Bei allen Formen der langen Teigwaren, vor allem bei Lasagne, stellt die Formstabilität, das Längenschneiden und die Manipulation der Ware bis zur Verpackung, ganz besondere Ansprüche. Die Hauptschwierigkeit liegt darin, die einzelne Ware von der Teigformeinrichtung unbeschädigt, in vorgegebener Länge und Stückzahl, in die Konsumpackung zu bringen.

Lasagne sind längliche, dünne, getrocknete Teigblätter und unterliegen wegen dieser Form einer grösseren Bruchgefahr. Die sogenannten Spezialformate werden bis heute meistens noch von Hand portionenweise in die Konsumpackung gelegt. Der Vorteil liegt hierbei in der schonenden Manipulation durch die menschlichen Hände bei gleichzeitiger Sichtkontrolle für allfällige Schäden oder qualitative Mängel der Ware. Die Handabfüllung aber begrenzt die Anlagenleistung und verteuert das Endprodukt. Je nach Herstellverfahren treten teils schon vor der Verpackung viele Schäden auf, die dann die Verpackung an sich oder den Konsumenten stören, besonders bei flachen Formaten.

Es sind schon viele Lösungen für automatische Verpackungen von Spezialformaten vorgeschlagen worden. So werden z.B. Nudeln als Hohlformate ähnlich verpackt wie Spaghetti. Dafür müssen jedoch die Betriebseinrichtungen für das "Handling" bei jedem Produktwechsel mit relativ grossem Aufwand wieder angepasst werden.

Eine funktionsfähige automatische Verpackung von Lasagne ist in der US-PS 4'769'975 beschrieben. Die Lasagne werden serienweise, entsprechend der Stückzahl, die auf einem Trockenstab hängen, auf einer Nudelschneidmaschine in zwei gleiche Längen im Durchlauf geschnitten und am Ende eines Taschenförderbandes einer Schneideinrichtung zugeführt. Ferner wird die Lasagne von einem oberen Trum auf ein unteres Trum transportiert, und von dort in ein Zwischenmagazin abgefüllt. Das Zwischenmagazin hat mindestens eine so grosse Zahl Portionenfächer wie Teigstreifen auf einem Trockenstab hängen. Ist die für die Konsumverpackung gewünschte Stückzahl in den Portionenfächern erreicht, wird diese in den Taschenförderer eines weiteren Förderbandes abgelassen und von dazu zwei weiteren Förderbändern, auf welchen Verpackungsbehälter liegen, geführt. Während der Füllphase des Zwischenmagazines ergibt sich so eine genügend grosse Zeitspanne, damit die Förderbänder schrittweise je ein Portionenfach vorwärts bewegen bis zur Einzelverpackung der Portionen aus einer Uebergabestelle am Ende jedes Förderbandes. Die üblichen Längen der Teigstreifen auf den Trockenstäben erlauben beim Schnitt je zwei Längen von Lasagne nebeneinander herzustellen, so dass entsprechend bei dem Lösungsvorschlag der US-Patentschrift 4'769'975 nebeneinander ein doppeltes Zwischenmagazin und ein doppeltes Förderband besteht.

In der US 3,512,336 ist eine weitere Vorrichtung für automatische Verpackung offenbart. In dieser Vorrichtung werden die einzelnen Taschen, gefüllt mit bestimmten Produkten, mittels mehreren Förderbändern zum Verpackungsbehälter transportiert und in diese abgelegt. Diese Vorrichtung geht ebenfalls von dem Konzept der Einzelverpackung aus.

Der Hauptnachteil der bekannten Lösungen liegt in dem Konzept der Einzelverpackung. Obschon das Zwischenmagazin in der US-PS 4,769,975 einen quasi kontinuierlichen Betrieb der Schneideinrichtung ergibt, begrenzt letztlich aber die Einzelverpackung, die gesamte Verarbeitungsleistung der Verarbeitungslinie. Es ist nur eine gerade Stückzahl der Teigformate jeder Portion möglich.

Der Erfindung wurde nun die Aufgabe gestellt, ein neues Konzept zu entwickeln, das eine automatische Manipulation der Ware bei wesentlich grösserer Verarbeitungskapazität erlaubt.

Die erfindungsgemässe Lösung ist dadurch gekennzeichnet, dass die Teigformate nach dem Schneiden serienweise bevorzugt direkt auf einen Verpackungsförderer überführt und aufgeschichtet, und zu vorwählbaren Portionen-Stückzahlen zusammengestellt werden. Damit kann auch das Zwischenmagazin aus der oben erwähnten US-Patentanmeldung entfallen.

Die Erfindung erlaubt eine ganze Anzahl besonders vorteilhafter Ausgestaltungen. So wird vorgeschlagen, die Teigformate hängend auf Stäben getrocknet und stabweise über Führungen in ein Taschenförderband positioniert zu legen und im Durchlauf zu schneiden. Die Teigformate werden paarweise von dem Taschenförderband in den Verpackungsförderer geführt.

Eine weitere ganz besonders interessante Ausgestaltung liegt darin, dass die Teigformate nach dem Schneiden über eine Rutsche gleitend auf den Verpackungsförderer geführt werden. Die Teigformate werden serienweise auf dem oberen Trum eines Endlosförderbandes mittels einer Haltevorrichtung auf ein unteres Trum und auf eine kippbare Stützfläche geführt und als Einzelformat oder paarweise über eine Rutsche auf den Verpackungsförderer geführt. Die Rutsche ist im Übergabebereich geneigt, so dass die Teigformate frei nach unten abgleiten, und von einem Abgabeende in eine Horizontalbewegung umgelenkt werden.

Die Erfindung betrifft ferner eine Vorrichtung zur Durchführung des Verfahrens und ist dadurch gekennzeichnet, dass sie einen Verpackungsförderer, Rutschen und eine kippbare Stützfläche aufweist.

Bei einer besonders vorteilhaften Ausgestaltung ist zwischen einer Schneideinrichtung und dem Verpackungsförderer eine Uebergaberutsche angeordnet zur serienweisen Ueberführung der Formate mittels Schwerkraft. Entgegen ursprünglichen Befürchtungen, erlaubt die Rutsche nicht nur ein sanftes Ueberführen der Ware in den Verpackungsförderer, sondern gleichzeitig ein störungsfreies Hineinlegen in hoher Präzision, unabhängig der Länge der Lasagne.

Die Erfindung wird nun anhand einiger Ausführungsbeispiele mit weiteren Einzelheiten erläutert.

Es zeigen:
- Fig. 1: schematisch die Ueberführung der Formate von einem Ablegetisch auf einen Verpackungsförderer;
- Fig. 2: eine Rutsche zwischen Schneideinrichtung und dem Verpackungsförderer;

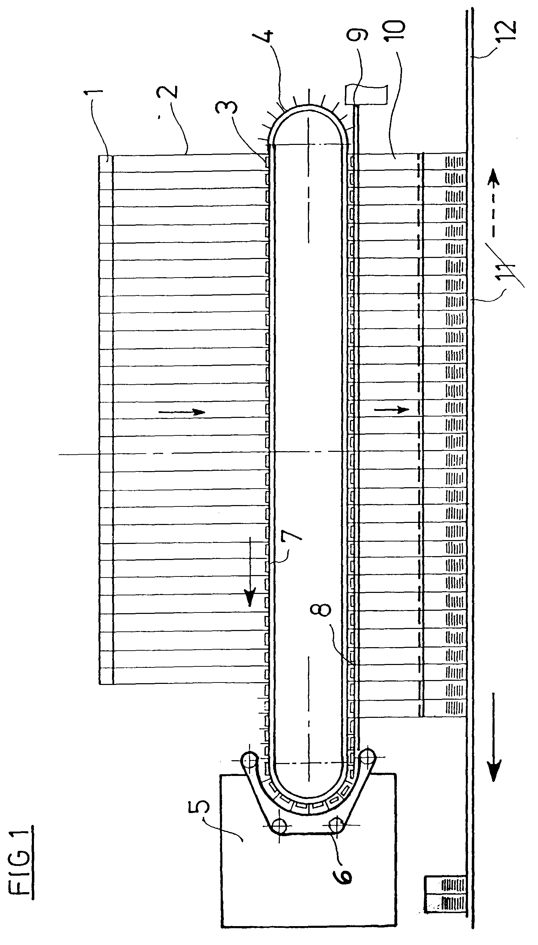

Es wird nun in der Folge auf die Fig. 1 Bezug genommen. Von einem Ablegetisch 1 werden über Führungen 2, die Lasagne 3 auf ein Endlos-Taschenförderband 4 mit unverändertem Abstand abgelegt, wobei gleichzeitig die ganze Menge eines einzelnen nicht dargestellten Stabes als ganze Serie abgelegt wird. Die Lasagne-Blätter werden durch eine Schneideinrichtung 5 auf die Verpackungslänge im kontinuierlichen Durchlauf abgeschnitten. Die geschnittenen Lasagne werden von einem Leitband 6 gehalten, von einem oberen Trum 7 auf ein unteres Trum 8 überführt und danach von einer kippbaren Stützfläche 9 kurzzeitig in abgehobenen Zustand gehalten, bis die ganze Serie der Formate eines Trocknungsstabes über darunter angeordnete Rutschen 10 bereit liegt.

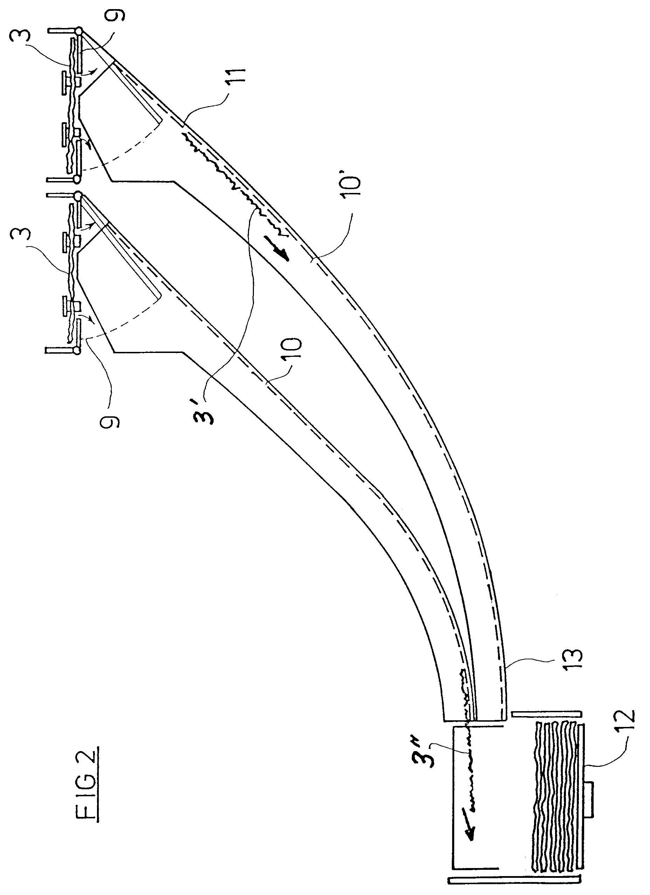

In der Fig. 2 ist die Funktionsweise der Rutschen 10 resp. 10' dargestellt. Die geschnittenen Lasagne 3 liegen solange auf der Stützfläche 9, bis sie nach einer Kippbewegung sich auf die Rutsche 10 ablegt und mittels eigener Schwerkraft, schräg nach unten gleitet (Lasagne 3'). Die Lasagne können auf je zwei nebeneinanderliegenden, kippbaren Stutzflächen 9, erst über einen oberen, schrägen Rutschteil 11 nach unten gleiten, und über einen nahen horizontal liegendes Abgabeende 13 auf den Verpackungsförderer 12 gegeben werden. Jede Rutsche 10, 10' ist als U-förmiger Trog mit seitlicher Führung ausgestaltet. Gemäss der Lösung in der Fig. 2 können beide Rutschen 10, resp. 10' zur Erstellung derselben Portion benutzt werden, wobei die Rutsche 10 etwas höher endet, als die Rutsche 10'. Der Verpackungsförderer 12 kann als Taschenförderer ausgebildet sein, oder es können auf ihm direkt die leeren Verpackungen aufgelegt und die einzelnen Formate über die Rutsche direkt in die Verpackung gefüllt werden.

### Merkmalsverzeichnis

- 1: Ablegetisch
- 2: Führungen
- 3, 3', 3'': Lasagne
- 4: Endlosförderband
- 5: Schneideinrichtung
- 6: Leitband
- 7: oberes Trum
- 8: unteres Trum
- 9: kippbare Stützfläche
- 10, 10': Rutsche
- 11: Rutschteil
- 12: (Förderer) Verpackungsförderer
- 13: Abgabeende

## Patentansprüche

1. Verfahren zur Manipulation und Portionierung von langen Teigformaten, insbesondere von Lasagne (3, 3', 3''), wobei die Teigformate über eine Teigformateinrichtung in parallelen Bahnen hergestellt, getrocknet und in verfestigter Form in die Verpackungslänge geschnitten und für die Verpackung bereitgestellt werden,
dadurch gekennzeichnet, dass
die Teigformate nach dem Schneiden direkt serienweise in vorwählbaren Portionen-Stückzahlen auf einen Verpackungsförderer (12) überführt und aufgeschichtet werden.

2. Verfahren nach Anspruch 1, dadurch gekennzeichnet, dass die Teigformate nach dem Schneiden über eine Rutsche (10, 10') gleitend auf den Verpackungsförderer (12) geführt werden.

3. Verfahren nach einem der Ansprüche 1 oder 2, dadurch gekennzeichnet, dass die Teigformate auf dem oberen Trum (7) eines Endlosförderbandes (4) geschnitten, mittels einer Haltevorrichtung auf das unten liegende Trum (8) überführt, und von einer kippbaren Stützfläche (9) paarweise über eine Rutsche (10, 10') auf den Verpackungsförderer (12) geführt werden.

4. Verfahren nach Anspruch 2 oder 3, dadurch gekennzeichnet, dass die Rutsche (10, 10') in einem Übergabebereich geneigt ist, so dass die Teigformate nach Freigabe durch die Stützfläche (9) frei nach unten abgleiten, und von einem Abgabeende (13) in eine Horizontalbewegung umgelenkt werden.

5. Vorrichtung zur Durchführung des Verfahrens nach einem der Ansprüche 1 bis 4, dadurch gekennzeichnet, dass sie einen Verpackungsförderer (12) und Rutschen (10, 10') und eine kippbare Stützfläche (9) aufweist.

6. Vorrichtung nach Anspruch 5, dadurch gekennzeichnet, dass Rutschen (10, 10') zwischen einer Schneideinrichtung (5) und dem Verpackungsförderer (12), zur serienweisen Überführung der Formate angeordnet sind.

7. Vorrichtung nach Anspruch 6, dadurch gekennzeichnet, dass die Rutschen (10, 10') zwischen der kippbaren Stützfläche (9) und dem Verpackungsförderer (12) angeordnet sind.

8. Vorrichtung nach Anspruch 5, 6 oder 7, dadurch gekennzeichnet, dass Rutschen (10, 10') im Übergabebereich geneigt sind.

9. Vorrichtung nach Anspruch 5, 6 oder 7, dadurch gekennzeichnet, dass Verpackungsförderer (12) als Taschenförderer ausgebildet ist, oder dass auf ihm direkt die leeren Verpackungen aufgelegt werden.

10. Vorrichtung nach einem der Ansprüche 5 bis 8, dadurch gekennzeichnet, dass jede Rutsche (10, 10') als u-förmiger Trog ausgebildet ist.

## Claims

1. Process for the manipulation and portioning of long pasta shapes, in particular of lasagne (3, 3', 3''), in which the pasta shapes are produced in parallel strips using a pasta shaping device, dried and in hardened form cut into packaging lengths and prepared for packaging, characterised in that after cutting the pasta shapes are conveyed in batches in pre-selectable numbers per portion directly on to a packaging conveyor (12) and stacked.

2. Process according to claim 1, characterised in that after cutting the pasta shapes are slid on to the packaging conveyor (12) via a chute (10, 10').

3. Process according to one of claims 1 or 2, characterised in that the pasta shapes are cut on the upper strand (7) of a continuous conveyor belt (4), conveyed on to the lower strand (8) by means of a holding device, and guided in pairs from a tiltable supporting surface (9) via a chute (10, 10') on to the packaging conveyor (12).

4. Process according to claim 2 or 3, characterised in that the chute (10, 10') is inclined in a transfer region, so the pasta shapes after release by the supporting surface (9) slide freely downwards and are deflected by a discharge end (13) into a horizontal movement.

5. Device for carrying out the process according to one of Claims 1 to 4, characterised in that it has a packaging conveyor (12) and chutes (10, 10') and a tiltable supporting surface (9).

6. Device according to claim 5, characterised in that chutes (10, 10') are arranged between a cutting device (5) and the packaging conveyor (12) for conveying the shapes in batches.

7. Device according to claim 6, characterised in that the chutes (10, 10') are arranged between the tiltable supporting surface (9) and the packaging conveyor (12).

8. Device according to claim 5, 6 or 7, characterised in that chutes (10, 10') are inclined in the transfer region.

9. Device according to claim 5, 6 or 7, characterised in that the packaging conveyor (12) is designed as a pocket conveyor, or in that the empty packages are placed directly on it.

10. Device according to one of claims 5 to 8, characterised in that each chute (10, 10') is designed as a u-shaped trough.

## Revendications

1. Procédé pour manipuler et former en portions des formats de pâtes allongés, notamment des lasagnes (3, 3', 3''), les formats de pâtes étant, au moyen d'une installation de formats de pâtes, produits en bandes parallèles, séchés et découpés à la longueur d'emballage sous une forme consolidée et tenus prêts à l'emballage, caractérisé en ce qu'après le découpage, les formats de pâtes sont, directement et en groupes suivant des nombres d'éléments de portion pouvant être préfixés, transférés et superposés sur un transporteur d'emballage (12).

2. Procédé suivant la revendication 1, caractérisé en ce qu'après le découpage, les formats de pâtes sont envoyés sur le transporteur d'emballage (12) en glissant sur un couloir (10, 10').

3. Procédé suivant l'une des revendications 1 et 2, caractérisé en ce que les formats de pâtes sont découpés sur le brin supérieur (7) d'un transporteur à bande sans fin (4), sont transférés sur le brin (8) situé au-dessous à l'aide d'un dispositif de maintien et sont envoyés à partir d'une surface de soutien (9) basculable, par paires et à l'aide d'un couloir (10, 10'), sur le transporteur d'emballage (12).

4. Procédé suivant la revendication 2 ou 3, caractérisé en ce que le couloir (10, 10') est incliné dans une zone de raccordement, de façon telle qu'après avoir été libérés par la surface de soutien (9), les formats de pâtes glissent librement vers le bas et sont déviés suivant un mouvement horizontal à partir d'une extrémité de sortie (13).

5. Installation de mise en oeuvre du procédé suivant l'une des revendications 1 à 4, caractérisé en ce qu'il comprend un transporteur d'emballage (12), des couloirs (10, 10') et une surface de soutien (9) basculable.

6. Installation suivant la revendication 5, caractérisée en ce que des couloirs (10, 10') sont disposés entre un dispositif de découpage (5) et le transporteur d'emballage (12) en vue d'un transfert des formats par groupes.

7. Installation suivant la revendication 6, caractérisée en ce que les couloirs (10, 10') sont disposés entre la surface de soutien (9) basculable et le transporteur d'emballage (12).

8. Installation suivant la revendication 5, 6 ou 7, caractérisée en ce que les couloirs (10, 10') sont inclinés dans la zone de raccordement.

9. Installation suivant la revendication 5, 6 ou 7, caractérisée en ce que le transporteur d'emballage (12) est réalisé sous forme d'un transporteur à alvéoles ou en ce que les emballages vides sont déposés directement sur lui.

10. Installation suivant l'une des revendications 5 à 8, caractérisée en ce que chaque couloir (10, 10') est réalisé sous forme d'une gouttière en U.
